# EUROPÄISCHE PATENTANMELDUNG

(11) **EP 0 654 653 A1**
(43) Veröffentlichungstag der Anmeldung: **24.05.1995**
(21) Anmeldenummer: 94117319.7
(22) Anmeldetag: 03.11.1994
(51) Int. Cl.: G01F 1/32

(54) **Einrichtung zur Messung der Geschwindigkeit eines Fluides**

(30) Priorität: 22.11.1993 CH 3480/93
(71) Anmelder: Georg Fischer Rohrleitungssysteme AG, CH-8201 Schaffhausen (CH)
(72) Erfinder: Schalk, Adelbert, D-79793 Wutöschingen-Horheim (DE)
(74) Vertreter: Szilagyi, Marianne

(57) **Zusammenfassung**

Die auf dem Karman'schen Prinzip arbeitende Durchflussmess-Einrichtung weist einen in einem Steg (7) und somit mit Kunststoff ummantelten Biegesensor (8) auf. Durch die einstückige Ausbildung des ein Teil der Gehäuses bildenden Formteiles (2) mit dem Steg (7) werden Ecken und Toträume sowie Abdichtungsprobleme vermieden.

## Beschreibung

Die Erfindung betrifft eine Einrichtung zur Messung der Geschwindigkeit eines Fluides, wie sie im Oberbegriff von Anspruch 1 gekennzeichnet ist.

Derartige Einrichtungen sind unter dem Begriff Karman'scher Wirbelzähler bekanntgeworden. Diese Einrichtungen weisen einen in dem Durchflusskanal angeordneten, Wirbel erzeugenden Störkörper auf. Die Wirbel bewirken Druckschwankungen, deren Frequenz proportional zur Durchflussgeschwindigkeit ist. Die Druckschwankungen erzeugen durch einen in den Durchflusskanal ragenden Biegesensor, bestehend aus einem Piezoelement, Ladungsunterschiede, welche durch Umwandlung in Spannungssignale zur Durchflussmessung entsprechend ausgewertet werden.

Durch die DE-C-40 26 447 ist ein entsprechender Karmanwirbel-Durchflussmesser bekanntgeworden, deren wirbelerzeugende Einrichtung bzw. der Störkörper druckerfassende Öffnungen aufweist, die über Kanäle mit dem Drucksensor verbunden sind. Nachteilig hierbei ist die Verstopfungsgefahr dieser Kanäle. Der Einsatz des Störkörpers in das rohrförmige Formteil und die Anordnung des Drucksensor teilweise ausserhalb des Formkörpers können Dichtungsprobleme am Störkörper und/oder der Sensoreinheit und ungenaue Messergebnisse ergeben, da keine definierte Schwingungsrichtung entstehen kann.

Weiter vorbekannte Lösungen sind Wirbelfrequenzdetektion mit:
· Thermistoren Auch hier besteht die Gefahr der Verschmutzung
· Drucksensoren über eine Membran
   Nachteilig ist hier Alterungsempfindlichkeit der Membran und die relativ niedrige Ansprechempfindlichkeit sowie die Temperaturabhängigkeit des Messsignals
Der Erfindung liegt die Aufgabe zugrunde, unter Vermeidung der genannten Nachteile eine Einrichtung zur Messung der Geschwindigkeit eines Fluides der eingangs genannten Art zu schaffen, die einfach ausgebildet, ohne Abdichtprobleme montierbar ist, dabei aber zuverlässig und genau in einem genügend grossen Geschwindigkeitsbereich mit hoher Empfindlichkeit arbeitet.

Erfindungsgemäss wird diese Aufgabe durch die kennzeichnenden Merkmale von Anspruch 1 gelöst.

Besonders vorteilhafte Ausbildungen der Erfindung sind in den davon abhängigen Ansprüchen gekennzeichnet.

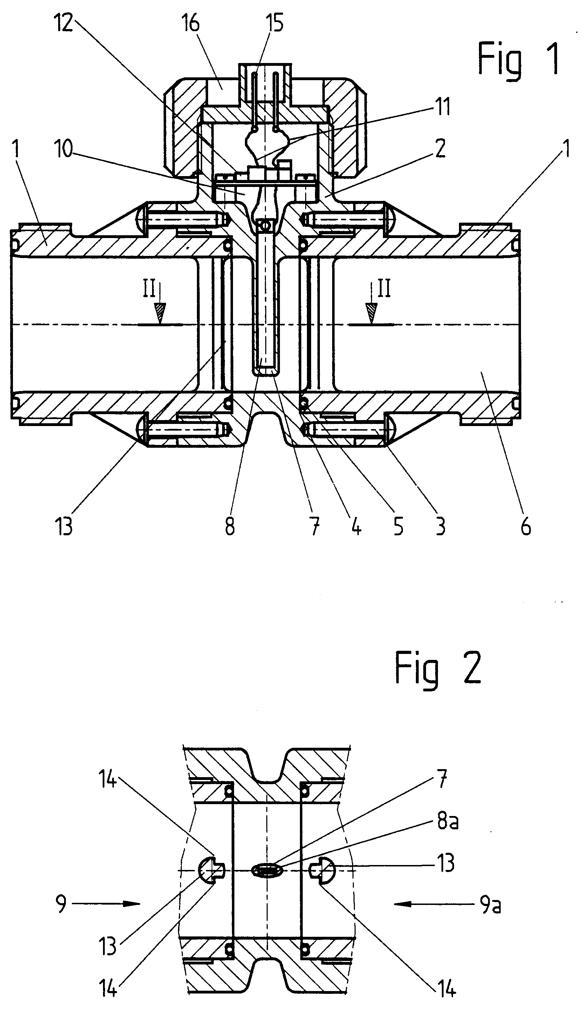

Die Erfindung ist in den Zeichnungen in Ausführungsbeispielen dargestellt und nachfolgend beschrieben. Es zeigen:
- Fig. 1: einen Längsschnitt eines ersten Ausführungsbeispiels der Einrichtung
- Fig. 2: einen Teilschnitt entlang der Linie II - II von Fig. 1
- Fig. 3: einen Längsschnitt einer zweiten Ausführungsvariante der Einrichtung und
- Fig. 4: einen Teilschnitt entlang der Linie IV - IV von Fig. 3.
- Fig. 5: eine Ausführungsvariante der in Fig. 1 gezeigten Anordnung des Biegesensors in vergrösserter Darstellung
Das Gehäuse der in den Fig. 1 und 2 dargestellten Einrichtung zur Messung der Geschwindigkeit eines Fluides ist dreiteilig und besteht aus zwei rohrförmigen Teilen 1 und einem dazwischen angeordneten Formteil 2. Die beiden Teile 1 sind mittels Schrauben 3 am Formteil 2 angeflanscht, wobei eine dichte Verbindung durch an den Stirnflächen 4 angeordneten Dichtringen 5 gewährleistet ist. Die Teile 1 und 2 bilden einen Durchflusskanal 6 für das durchströmende Fluid, wie z.B. eine Flüssigkeit, Dampf oder Gas.

Das Formteil 2 weist einen in den Durchflusskanal 6 ragenden Steg 7 auf, in welchem ein Biegesensor 8 aus Piezokeramik angeordnet ist, welcher im Querschnitt rechteckig ausgebildet ist. Hierbei verlaufen die beiden Flachseiten 8a des Biegesensors 8 parallel zur Strömungsrichtung 9 des Fluides. Der Steg 7 ist im Querschnitt ebenfalls länglich, vorzugsweise strömungsgünstig oval oder rechteckig ausgebildet und einstückig mit dem Formteil 2 an dessen Durchflusskanal-Innenwand verbunden. Im gezeigten Ausführungsbeispiel ist der Biegesensor 8 vom Steg 7 ohne Zwischenraum im Bereich des Durchflusskanals 6 allseitig ummantelt. Dies erfolgt bei der Herstellung des aus Kunststoff bestehenden Formteils 2 im Spritzgussverfahren, wobei der in die Spritzform eingelegte Biegesensor 8 mit dem gleichen Kunststoff ummantelt wird.

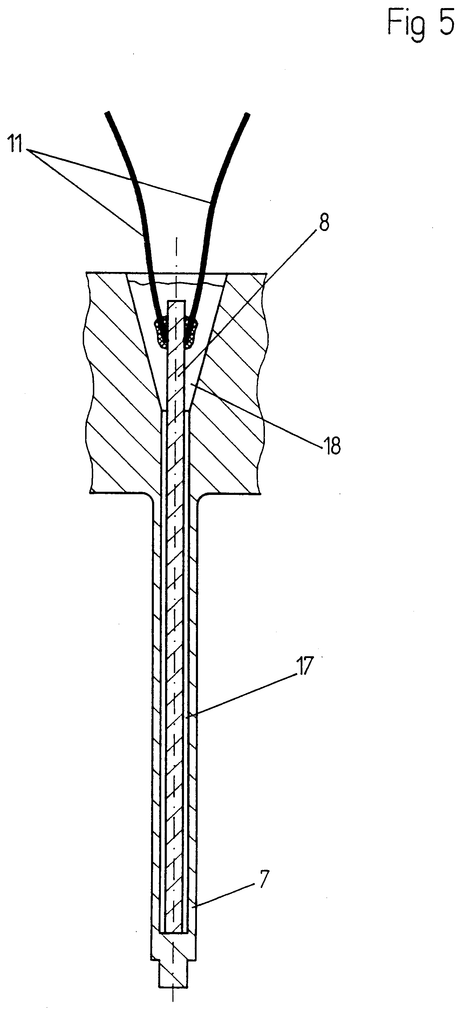

In einer in Fig. 5 dargestellten Ausführungsvariante wird der Biegesensor 8 mit seinen Flachseiten 8a parallel zur Strömungsrichtung 9 in eine im Querschnitt vorzugsweise ellipsenförmige Ausnehmung 17 des Steges 7 eingesteckt, wobei der Zwischenraum zwischen dem Biegesensor und der Innenwand der Ausnehmung 17 vollständig mit einer akustisch gut leitenden, elektrisch isolierenden Masse 18 ausgefüllt wird. Es ist ebenso möglich, den Biegesensor nur am oberen und unteren Ende in der Ausnehmung 17 zu fixieren.

Es besteht auch die Möglichkeit, den Biegesensor 8 nach dem Einstecken in die Ausnehmung 17 durch einen Schrumpfprozess ohne Zwischenraum im Steg 7 anzuordnen.

Das in einen freien Raum 10 des Formteiles 2 ragende Ende des Biegesensors 8 ist mittels Leitungen 11 mit einer darin angeordneten Elektronikeinheit 12 verbunden.

Die beiden rohrförmigen Teile 1 weisen im Bereich der Anflansch-Stirnflächen 4 Störkörper 13 auf, welche parallel zu dem Biegesensor 8 quer im Durchflusskanal 6 angeordnet sind. Jeder Störkörper 13 ist mit Abrisskanten 14 versehen welche durch Anströmung des Fluides in Strömungsrichtung 9 stromabwärts alternierend Wirbel erzeugen. Formen von Störkörpern sind aus der Literatur hinreichend bekannt.

Die Wirbel bewirken Druckschwankungen, deren Frequenz proportional zur Durchflussgeschwindigkeit ist. In einem Bereich mit konstanter Ausbildung der Druckschwankungen befindet sich der mit Kunststoff umgebene Biegesensor 8, welcher dadurch in Biegeschwingungen quer zur Strömungrichtung versetzt wird. Die im Biegesensor 8 entstehenden frequenzabhängigen Ladungsunterschiede werden über die Leitungen 11 in die Elektronikeinheit 12 geführt und von dieser in eine extern auswertbare Ausgangsgrösse z.B. Frequenz, Spannung 0-10 V, Strom 4-20 mA umgewandelt, wobei die Signale über eine Steckverbindung 15 abgeleitet werden können.

Es besteht auch die Möglichkeit, dass die Durchflussgeschwindigkeiten zusätzlich direkt auf einem im Bereich 16 des Formteiles 2 befindlichen Display angezeigt werden.

Bei der in den Fig. 1 und 2 gezeigten Ausführungsvarianten ist eine Messung der Durchflussgeschwindigkeit in beiden Strömungsrichtungen 9 und 9a gewährleistet, da beidseits des Biegesensors 8 je ein Störkörper 13 mit Abrisskanten 14 angeordnet ist.

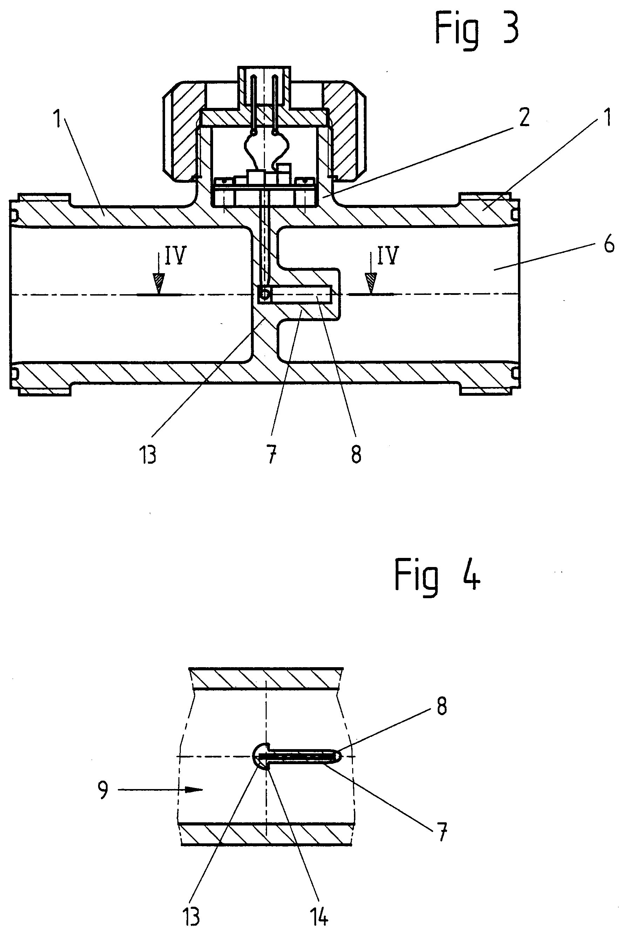

Bei der in den Fig. 3 und 4 gezeigten Ausführungsvarianten ist das Formteil 2 einstückig mit den rohrförmigen Teilen 1 hergestellt. Im Durchflusskanal 6 ist ein Störkörper 13 mit Abrisskanten 14 angeordnet, an welchem gleichzeitig der Steg 7 zur Aufnahme des Biegesensors 8 einstückig angeordnet ist.

Bei dieser Auführungsvariante ist die Messung der Geschwindigkeit für nur eine Strömungsrichtung 9 vorgesehen.

Durch die einstückige Herstellung des Formteiles 2 mit den rohrförmigen Teilen 1, dem Störkörpers 13 mit dem vom Steg 7 umspritzten Biegesensor 8 ist eine kostengünstige Herstellung der Einrichtung gewährleistet, wobei auch keine Andichtprobleme vorhanden sind. Die vorgänig beschriebene Einrichtungen weisen weiterhin folgenden Vorteile auf:
· Herstellung in Vollkunststoffausführungen ohne Ecken und Kanten, d.h. totraumfrei für High Purity Anwendungen
· alle mit dem Fluid in Berührung kommenden Flächen sind aus Kunststoff, wie z.B. Polyvinylchlorid, Polypropylen, Polyvinylidenfluorid, Polybuten usw. und somit für alle Medien gemäss der entsprechenden Beständigkeitsliste geeignet
· es ist eine ex-geschützte Ausführung nach EN 50019 (erhöhte Sicherheit), EN 50020 (Eigensicherheit), EN 50028 (Vergusskapselung) möglich
· Messung in beiden Durchflussrichtungen ist möglich
· geringe Druckverluste
· durch die konstruktive Anordnung des Sensorelementes ergeben sich keine Rückwirkungen von Druckschwankungen des Fluides auf das Messergebnis

## Patentansprüche

1. Einrichtung zur Messung der Geschwindigkeit eines Fluides mit mindestens einem in einem Durchflusskanal eines Formteils aus Kunststoff angeordneten Störkörper und einem Biegesensor aus Piezokeramik, dadurch gekennzeichnet, dass der im Querschnitt länglich ausgebildete Biegesensor (8) mit den Flachseiten (8a) parallel zur Strömungsrichtung (9, 9a) in einem mit dem Formkörper (2) fest verbundenen, in den Durchflusskanal (6) ragenden Steg (7) angeordnet ist.

2. Einrichtung nach Anspruch 1, dadurch gekennzeichnet, dass der Biegesensor (8) in einer länglichen Ausnehmung (17) des Steges (7) angeordnet ist, wobei der Zwischenraum der Ausnehmung (17) und dem Biegesensor (8) vollständig mit einer akustisch gut leitenden, elektrisch isolierten Masse (18) gefüllt ist.

3. Einrichtung nach Anspruch 1, dadurch gekennzeichnet, dass der Biegesensor (8) in einer Ausnehmung (17) des Steges (7) eingesteckt und durch einen nachträglichen Schrumpfprozess ohne Zwischenraum im Steg (7) angeordnet ist.

4. Einrichtung nach Anspruch 1, dadurch gekennzeichnet, dass der Biegesensor (8) bei der Herstellung des Formkörpers (2) im Spritzgussverfahren mit dem Kunststoff des Formkörpers (2) ummantelt ausgebildet ist.

5. Einrichtung nach einem der Ansprüche 1 bis 4, dadurch gekennzeichnet, dass in Druchflussrichtung (9, 9a) gesehen beidseits des Biegesensors (8) je ein Störkörper (13) angeordnet ist.

6. Einrichtung nach einem der Ansprüche 1 bis 4, dadurch gekennzeichnet, dass der Störkörper (13) an dem den Biegesensor (8) aufweisenden Steg (7) angeordnet ist und einstückig mit diesem verbunden ist.

7. Einrichtung nach einem der Ansprüche 1 bis 6, dadurch gekennzeichnet, dass der Formkörper (2) mit dem Biegesensor (8) zwischen zwei rohrförmigen Teilen (1) dicht eingespannt ist, wobei mindestens einer der rohrförmigen Teile einen Störkörper (13) aufweist.

8. Einrichtung nach einem der Ansprüche 1 bis 7, dadurch gekennzeichnet, dass der in den Durchflusskanal ragende Steg (7) mit dem Biegesensor (8) an einem Ende mit der Innenwand des Formkörpers (2) fest verbunden ist.

9. Einrichtung nach einem der Ansprüche 1 bis 7, dadurch gekennzeichnet, dass der Steg (7) mit beiden Enden mit der Innenwand des Formkörpers (2) fest verbunden ist.

10. Einrichtung nach Anspruch 8, dadurch gekennzeichnet, dass der Querschnitt des Biegesensors (8) so ausgebildet ist, dsas sich eine Verteilung der Durchbiegung auf die gesamte Sensorlänge ergibt.
